# EUROPÄISCHE PATENTSCHRIFT

(11) **EP 0 406 988 B1**
(45) Veröffentlichungstag und Bekanntmachung des Hinweises auf die Patenterteilung: **15.12.1993**
(21) Anmeldenummer: 90250126.1
(22) Anmeldetag: 16.05.1990
(51) Int. Cl.: B29C 59/04

(54) **Prägekalander**
Embossing rollers
Rouleaux de gaufrage

(30) Priorität: 06.07.1989 DE 3922190
(43) Veröffentlichungstag der Anmeldung: 09.01.1991
(73) Patentinhaber: Ramisch Kleinewefers GmbH, D-47803 Krefeld (DE)
(72) Erfinder: Patermann, Hans Dieter, D-4156 Willich 2 (DE)
(74) Vertreter: Knoblauch, Ulrich, Dr.-Ing.

(56) Entgegenhaltungen:
- DE-A- 1 752 269
- DE-A- 3 004 321
- DE-C- 3 506 256
- FR-A- 2 244 620
- FR-A- 2 565 891
- US-A- 2 801 949
- PATENT ABSTRACTS OF JAPAN, Band 9, Nr. 46 (M-360)[1769], 27. Februar 1985;& JP-A-59 185 620 (TOUKIYOU JIYUSHI SANGYO K.K.) 22-10-1984

## Beschreibung

Die Erfindung betrifft einen Prägekalander nach dem Oberbegriff des Anspruchs 1.

Ein solcher Kalander ist aus JP-A-59-185 620 (Abstract) bekannt. Im bekannten Fall gibt es einen Prägewalzenträger, an dem zwei Prägewalzen um 180° versetzt angebracht sind. Jeweils eine Prägewalze wirkt mit einer Gummiwalze zusammen. Der erforderliche Anpreßdruck wird mit Hilfe eines pneumatischen Zylinders erzeugt, der auf das Maschinengestell wirkt und dadurch die Prägewalze gegen die Gummiwalze drückt.

Bei dieser Konstruktion kann zwar die Prägewalze während des normalen Produktionsprozesses ausgewechselt werden. Will man dagegen die Gummiwalze ersetzen, muß die Anlage stillgesetzt werden. Ein solcher Ersatz ist notwendig, wenn die Gummiwalze abgenutzt ist oder wenn die Gummiwalze einen zur ausgewechselten Prägewalze oder zum behandelnden Bahnmaterial besser passenden Bezug erhalten soll.

Ferner ist aus DE-A-20 60 127 eine Prägekalander bekannt, bei dem die durch Zusammenkaschieren mehrerer Einzel-Kunststoffbahnen gebildete Materialbahn lediglich an ihrer Ober- oder Vorseite, auch als "Gutseite" bezeichnet, mit einer Prägung versehen wird. Es ist jedoch auch bekannt, derartige Materialbahnen zusätzlich zur Vorseitenprägung mit einer Rückseitenprägung zu versehen, welche beispielsweise dazu dienen kann, beim Pressen auf diese Weise hergestellter Materialbahnen aus Kunststoff in Tiefziehpressen oder dgl. das Entweichen von Luft an der rückseitigen Formfläche zu ermöglichen.

Gemäß DE-A-17 52 269 sind vier Prägewalzen planetenar- tig in einem Drehkäfig angeordnet. Von ihnen kann jeweils eine in die Arbeitsstellung gebracht werden, in der sie mit einer Gegenwalze zusammenwirken kann. Die Anpreßkraft wird dadurch erzeugt, daß die Drehkäfige in Lagerstücken gehalten sind, welche durch Öldruckzylinder belastbar sind.

DE-A-30 04 321 zeigt das Zusammenführen von zwei oder drei Folien, die anschließend in einem Prägekalander behandelt werden, der lediglich eine Prägewalze und eine Gegenwalze aufweist.

DE-C-35 06 256 zeigt, wie eine Prägewalze, eine Gegen- walze und eine Antriebswalze in einer Reihe in einem Gestell angeordnet sind. Das Gestell ist verschiebbar und klappbar, damit in der einen Stellung die Unterseite und in der anderen Stellung die Oberseite der Folie geprägt werden kann.

US-A-2 801 949 zeigt, daß eine zu prägende Folie vor dem Prägevorgang durch eine Heizvorrichtung mit Strahlungsheizung geführt wird.

FR-A-22 44 620 befaßt sich mit einer Schneidvorrichtung. Um unterschiedliche Streifen schneiden zu können, sind in der Ausführungsform der Fig. 5 und 6 drei Schneidwalzenpaare auf einem drehbaren Träger angeordnet. Es kann wahlweise eines der Paare in die Arbeitsstellung gebracht werden. Die einzelnen Messerwalzen können in dem drehbaren Träger fest gelagert werden, weil sie nicht gegeneinander angepreßt werden müssen.

Bei Prägekalandern besteht ein Problem insoweit, als bei einem Programm- oder Dessinwechsel, bei dem zumindest eine der Prägewalzen, häufig aber auch eine Gesamtkombination aus Prägewalze und Gegenwalze, vorgenommen werden muß, der Produktionsprozeß nicht weitergeführt werden kann, weil der Walzenwechsel nur bei stillstehender Kalanderanlage erfolgen kann. Derartige Produktionsunterbrechungen sind sehr kostenaufwendig.

Der Erfindung liegt die Aufgabe zugrunde, einen Prägekalander der gattungsgemäßen Art zu schaffen, der einen über das Auswechseln der Prägewalze hinausgehenden Programm- bzw. Dessinwechsel ohne nennenswerte Unterbrechung des Produktionsprozesses ermöglicht.

Erfindungsgemäß wird diese Aufgabe dadurch gelöst, daß am Prägewalzenträger mindestens zwei wahlweise benutzbare Prägekombinationen, die je eine Prägewalze und eine als Presseurwalze ausgebildete Gegenwalze aufweisen, angeordnet sind.

Weitere Ausbildungen ergeben sich aus den Unteransprüchen.

Dadurch, daß bei der Erfindung ein Prägewalzenträger, vorzugsweise in Form einer Drehscheibe zur Aufnahme von mindestens zwei Prägekombinationen, vorgesehen ist, kann der Walzenwechsel bei Programm- bzw. Dessinwechsel ohne wesentliche Unterbrechung des Produktionsprozesses durchgeführt werden, innerhalb weniger Minuten, so daß anfallende Rüstzeiten in die Produktionszeiten verlagert werden, woraus eine erhebliche Arbeits- und Kostenersparnis resultiert. Weitere Vorteile der Erfindung ergeben sich aus der nachfolgenden Beschreibung, in der ein Ausführungsbeispiel anhand der schematischen Zeichnung im einzelnen erläutert ist. Dabei zeigt:
- Fig. 1: die Prägestation eines Ausführungs beispieles eines Kalanders nach der Erfindung im Schnitt senkrecht zur Rotationsachse der Prägewalzen; und
- Fig. 2: in Fig. 1 entsprechender Darstellung eine der in Fig. 1 gezeigten Präge station vorgeschaltete Kaschier- und Vorprägestation.

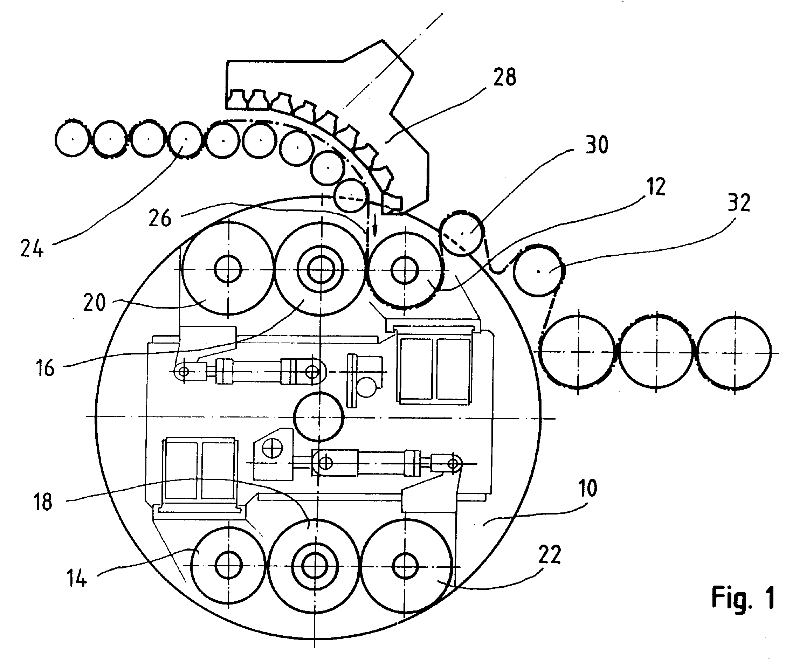

Wie Fig. 1 erkennen läßt, ist in einer Prägestation des Kalanders mit horizontaler Drehachse eine Drehscheibe 10 angeordnet, die als Prägewalzenträger dient und innerhalb deren Umfang an zwei einander gegenüberliegenden Positionen zwei Prägekombinationen angeordnet sind, welche jeweils eine Prägewalze 12 bzw. 14, eine dieser zugeordnete Presseurwalze 16 bzw. 18 und eine wiederum den Presseurwalzen 16 bzw. 18 angeordnete Kühlwalze 20 bzw. 22 umfaßt. Der als Prägewalzenträger dienenden Drehscheibe 10 ist ein Rollengang 24 mitangetrieben, ggf. beheizten Rollen zum Heranführen einer an ihrer Oberseite zu prägenden Materialbahn 26 vorgeschaltet, die bereits in der weiter unten noch zu erläuternden Weise, nachdem sie aus mehreren Kunststoff-Einzelbahnen zusammenkaschiert worden ist, oder als Einzelbahn mit einer Vorprägung versehen worden ist. Dem Rollengang 24 ist eine Strahlungsheizung 28 zugeordnet, die aus einer Anzahl von Infrarotstrahlern besteht. Der aus der Prägewalze 12, der Presseurwalze 16 und der Kühlwalze 20 bestehenden, in Fig. 1 in der (oberen) Arbeitsstellung befindlichen Prägekombination ist eine Abnahmewalze 30 (ebenso wie die Einzelrollen des Rollengangs 24 angetrieben, um ein Auftreten von Spannungen auf der Wegen der zum Prägen erforderlichen Temperatur erwärmten, weichen Materialbahn 26 zu vermeiden, nachgeschaltet, auf die eine Leitwalze 32 mit nachgeschaltetem, hier nicht weiter interessierenden Förderwalzen folgt. Die Förderrichtung der Materialbahn 26 ist durch einen Pfeil wiedergegeben.

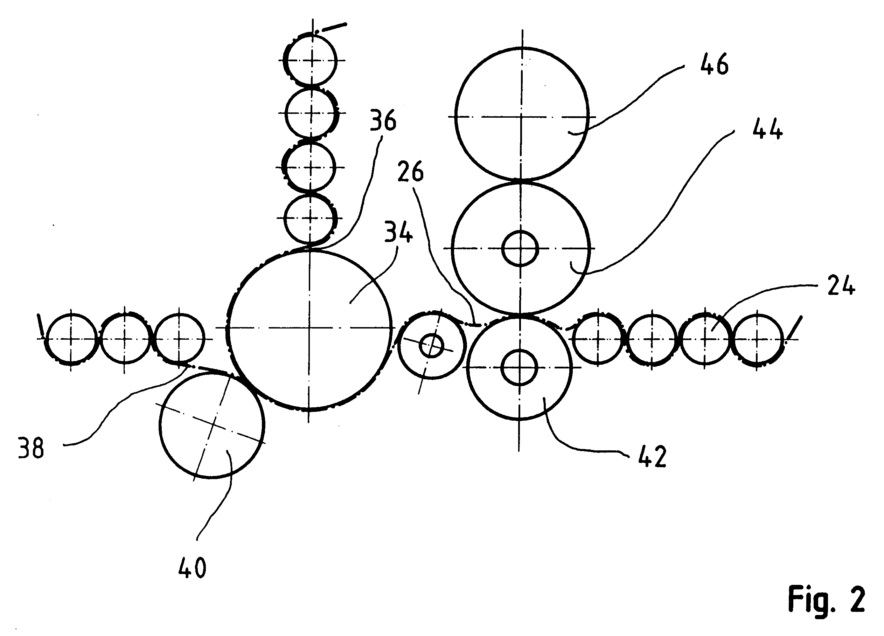

Fig. 2 läßt erkennen, in welcher Weise der in Fig. 1 im wesentlichen gezeigten Prägestation unter Fortsetzung des Rollenganges 24 nach links, in Fig. 1 gesehen, eine Kaschier- und Vorprägestation vorgeschaltet sind. Im einzelnen zeigt Fig. 2 hierzu folgendes:

Einer links wiedergegebenen beheizten Kaschierwalze 34 Werden zwei Einzel-Kunststoffbahnen 36, 38 zugeführt und durch das Zusammenwirken der Kaschierwalze 34 mit einer Presseurwalze 40 nach entsprechender Erhitzung zu der zu prägenden Materialbahn 26 zusammenkaschiert. Die Materialbahn 26 Wird durch einen Vorprägespalt geführt, der durch das Zusammenwirken einer Vorprägewalze 42 mit einer Presseurwalze 44 und einer diese beaufschlagenen Kühlwalze 46 gebildet ist. Die Vorprägewalze 42 dient dazu, auf die Rückseite der Materialbahn 26 eine Vorprägung aufzubringen. Im Anschluß an die Vorprägewalze 42 läuft die Materialbahn 26 auf den Rollengang 24, wird dort zum Vor- oder Gutseitenprägen vorerhitzt und gelangt dann in den in Fig. 1 gezeigten Kalanderteil, der bereits weiter oben beschrieben wurde.

Der vorstehend beschriebenen Prägekalander arbeitet wie folgt:

Der in Fig. 2 links gezeigten Kaschierstation, im wesentlichen aus der Kaschierwalze 34 und der dieser zugeordneten Presseurwalze 40 bestehend, werden über die aus der Zeichnung ersichtlichen beheizbaren Rollengänge von oben und unten die beiden Einzel-Kunststoffbahnen 36, 38 zugeführt und in dem Kaschierspalt zwischen der Kaschierwalze 34 und der Presseurwalze 40 zu der Materialbahn 26 vereinigt. Natürlich könnten auch Einzelkunststoffbahnen bzw. beschichtete Substratträger oder auch mehr als zwei Einzel-Kunststoffbahnen über weitere zusätzlich angebrachte Rollengange der Kaschierstation zugeführt werden. Von der Kaschierstation aus gelangt die Materialbahn 26 in die Vorprägestation, im wesentlichen aus der Vorprägewalze 42 mit zugeordneter Presseurwalze 44 und Kühlwalze 46 bestehend, in der eine Rückseiten-Vorprägung der noch warmen Materialbahn 26 erfolgt. Anschließend wird die mit der Rückseitenprägung versehene Materialbahn 26 über den Rollengang 24, der zusammen mit der Strahlungsheizung 28 eine Heizstation bildet, spannungsfrei der in Fig. 1 gezeigten Prägestation zugeführt, in der die Vor- oder Gutseitenprägung mittels der gerade in Arbeitsstellung befindlichen Prägekombination, in Fig. 1 aus der Prägewalze 12, der Presseurwalze 16 und der Kühlwalze 20 bestehend, erfolgt. Anschließend wird die nunmehr mit Rückseiten- und Vorseitenprägung versehene Materialbahn 26 über die Abnahmewalze 30 spannungsfrei abgenommen und mittels der Leitwalze 32, vor dieser schlaufenartig unbelastet durchhängend, wie aus Fig. 1 ersichtlich, bzw. über eine Sensorsteuerung auf die nachgeschalteten Förderwalzengänge abgefördert.

Die Drehscheibe 10 ermöglicht es, jeweils eine der Prägekombinationen 12, 16, 20 bzw. 14, 18, 22 in Arbeitsstellung zu halten, während die andere, in Fig. 1 unten gezeigte Prägewalzenkombination in Ruhestellung ist, so daß während des eigentlichen Produktionsvorganges dabei ein Walzenwechsel vorgenommen werden kann, entweder als Prägewalzenwechsel oder insgesamt als Prägewalzen- und Presseurwalzenwechsel, wobei ein Programmwechsel kurzfristig, innerhalb weniger Minuten, realisierbar ist. Anfallende Rüstzeiten werden auf diese Weise also in die Produktionszeiten verlagert.

Der Rollengang 24 ist im übrigen vorzugsweise so gestaltet, daß durch Herausfahren des üblicherweise bei Kaschieranlagen vorhandenen Rollenganges die Drehscheibe 10 mit den die Vor- oder Gutseiten-Prägung bewirkenden Prägekombinationen relativ zur Vorprägestation horizontal verfahrbar angeordnet ist, wodurch eine gebundene Warenführung zwischen der Kaschierstation und dem Rollengang ermöglicht wird. Die gebundene Warenführung, welche insgesamt in dem Prägekalander verwirklicht ist, erlaubt es, mit möglichst geringem Schrumpf zu arbeiten.

## Patentansprüche

1. Prägekalander zum Behandeln von Materialbahnen aus Kunststoff oder dgl. mit einer Prägestation, die mindestens zwei wahlweise benutzbare Prägewalzen (12, 14) mit horizontaler Rotationsachse und eine damit zusammenwirkende Gegenwalze aufweist, wobei die Prägewalzen (12, 14) mit gegenseitigem Umfangsabstand an einem Prägewalzenträger (10) angebracht sind, der zum Wechseln der jeweils in Arbeitsstellung befindlichen Prägewalze (12, 14) um eine horizontale Achse drehbar ist, dadurch gekennzeichnet, daß am Prägewalzenträger (10) mindestens zwei wahlweise benutzbare Prägekombinationen, die je eine Prägewalze (12, 14) und eine als Presseurwalze (16, 18) ausgebildete Gegenwalze aufweisen, angeordnet sind.

2. Prägekalander nach Anspruch 1, dadurch gekennzeichnet, daß jede der Prägekombinationen auch eine der Presseurwalze (16, 18) zugeordnete Kühlwalze (20, 22) aufweist.

3. Prägekalander nach Anspruch 1 oder 2, dadurch gekennzeichnet, daß zwei umfangsmäßig einander im wesentlichen gegenüberliegende Prägekombinationen (12, 16, 20; 14, 18, 22) vorgesehen sind.

4. Prägekalander nach einem der Ansprüche 1 bis 3, dadurch gekennzeichnet, daß mindestens vier Prägekombinationen (12, 16, 20; 14, 18, 22) vorgesehen sind, von denen jeweils zwei paarweise einander zugeordnete gleichzeitig zum Rückseiten- und Vorseitenprägen einer Materialbahn (26) in Arbeitsstellung bringbar sind.

5. Prägekalander nach einem der Ansprüche 1 bis 4, dadurch gekennzeichnet, daß die Prägestation lediglich zum Prägen der Vor-(gut)seiten der Materialbahn (26) eingerichtet und ihr eine Vorprägestation (42, 44, 46) zum Prägen der Rückseite der Materialbahn (26) vor- oder nachgeschaltet ist.

## Claims

1. Embossing calender for treating webs of plastic material or the like, comprising an embossing station having at least two optional embossing rollers (12, 14) with a horizontal axis of rotation and a back-up roller cooperating therewith, the embossing rollers (12, 14) being mounted with mutual circumferential spacing on an embossing roller carrier (10) which can rotate about a horizontal axis in order to change the respective embossing roller (12, 14) situated in the operating position, characterised in that at least two optional embossing combinations each having an embossing roller (12, 14) and a back-up roller designed as a pressure roller (16, 18) are arranged on the embossing roller carrier (10).

2. Embossing calender according to claim 1, characterised in that each of the embossing combinations also has a cooling roller (20, 22) associated with the pressure roller (16, 18).

3. Embossing calender according to claim 1 or claim 2, characterised in that two embossing combinations (12, 16, 20; 14, 18, 22) substantially circumferentially opposite one another are provided.

4. Embossing calender according to one of claims 1 to 3, characterised in that at least four embossing combinations (12, 16, 20; 14, 18, 22) are provided, two of which can be brought into the operating position in associated pairs for the simultaneous embossing of the back and the front of a web of material (26).

5. Embossing calender according to one of claims 1 to 4, characterised in that the embossing station is designed solely for embossing the front (right side) of the web of material (26) and a pre-embossing station (42, 44, 46) is arranged in front of or behind it for embossing the back of the web of material (26).

## Revendications

1. Calandre de gaufrage pour traiter des bandes de matériaux en matières plastiques ou similaires, comportant un poste de gaufrage muni d'au moins deux rouleaux de gaufrage (12,14) à axe de rotation horizontal utilisables au choix et d'un rouleau conjugué coopérant avec eux, les rouleaux de gaufrage (12,14) étant disposés avec une distance de séparation entre leurs surfaces de pourtour sur un support (10) de rouleaux de gaufrage qui, pour changer le rouleau de gaufrage (12,14) se trouvant en position de travail, peut tourner autour d'un axe horizontal, caractérisée en ce qu'au moins deux combinaisons de gaufrage utilisables au choix comportant chacune un rouleau de gaufrage (12,14) et un rouleau conjugué constitué en tant que rouleau presseur (16,18) sont disposées sur le support (10) de rouleaux de gaufrage.

2. Calandre de gaufrage selon la revendication 1, caractérisée en ce chacune des combinaisons de gaufrage comporte aussi un rouleau de refroidissement (20,22) associé au rouleau presseur (16,18).

3. Calandre de gaufrage selon la revendication 1 ou la revendication 2, caractérisée en ce qu'il est prévu deux combinaisons de gaufrage (12,16,20 ; 14,18,22) sensiblement opposées l'une à l'autre sur le pourtour.

4. Calandre de gaufrage selon l'une des revendications 1 à 3, caractérisée en ce qu'il est prévu au moins quatre combinaisons de gaufrage (12,16,20 ; 14,18,22) parmi lesquelles deux combinaisons chaque fois associées l'une à l'autre en une paire peuvent être amenées simultanément en position de travail pour gaufrer la face arrière et la face avant d'une bande de matériau (26).

5. Calandre de gaufrage selon l'une des revendications 1 à 4, caractérisée en ce que le poste de gaufrage n'est agencé que pour gaufrer la face avant (face utile) de la bande de matériau (26), un poste de prégaufrage (42,44,46) étant disposé avant ou après ce poste de gaufrage pour gaufrer la face arrière de la bande de matériau (26).
